# FASCICULE DE BREVET EUROPEEN

(11) **EP 3 576 177 B1**
(45) Date de publication et mention de la délivrance du brevet: **28.04.2021**
(21) Numéro de dépôt: 19176494.3
(22) Date de dépôt: 24.05.2019
(51) Int. Cl.: H01M 2/02, H01M 4/525, H01M 10/0562, H01M 10/52, H01M 10/04, H01M 6/40, H01M 10/052

(54) **MICROBATTERIE ENCAPSULEE PRESENTANT UNE ETANCHEITE AMELIOREE ET PROCEDE D'ENCAPSULATION OFFRANT UNE ETANCHEITE AMELIOREE**
EINGEKAPSELTE MIKROBATTERIE MIT VERBESSERTER ABDICHTUNG UND VERKAPSELUNGSPROZESS FÜR EINE VERBESSERTE ABDICHTUNG
ENCAPSULATED MICROBATTERY HAVING IMPROVED SEALING AND ENCAPSULATION PROCESS PROVIDING IMPROVED SEALING

(30) Priorité: 29.05.2018 FR 1854577
(43) Date de publication de la demande: 04.12.2019
(73) Titulaire: Commissariat à l'énergie atomique et aux énergies alternatives, 75015 Paris (FR)
(72) Inventeur: BEDJAOUI, Messaoud, 38054 GRENOBLE CEDEX 09 (FR); BRUN, Jean, 38054 GRENOBLE CEDEX 09 (FR); SIONNEAU, David, 37170 CHAMBRAY-LES-TOURS (FR)
(74) Mandataire: Brevalex

(56) Documents cités:
- US-A1- 2008 003 493

## Description

### DOMAINE TECHNIQUE ET ÉTAT DE LA TECHNIQUE ANTÉRIEURE

La présente invention se rapporte à une microbatterie encapsulée présentant une étanchéité améliorée, par exemple à une microbatterie lithiée encapsulée et à un procédé d'encapsulation offrant une étanchéité améliorée.

Les microbatteries, notamment les microbatteries à base de matériaux lithiés sont très sensibles aux éléments atmosphériques tels que l'oxygène, l'azote et la vapeur d'eau. Afin de protéger les microbatteries et leur assurer une intégrité mécanique et électrique dans le temps, une encapsulation est prévue.

Par exemple la microbatterie, i.e. l'empilement électrode positive, électrolyte, électrode négative, est formée par dépôt et gravure sur un substrat et un capot d'encapsulation est disposé sur l'empilement, isolant celui-ci de l'environnement extérieur.

De manière générale, il existe deux types d'encapsulation, l'encapsulation monolithique et l'encapsulation hétérogène. L'encapsulation monolithique est obtenue par dépôt de couches directement sur le substrat et l'empilement. Ce type d'encapsulation requiert d'alterner les couches de natures différentes (organiques et inorganiques) afin d'atteindre le niveau de performance en termes d'étanchéité. Le procédé de réalisation d'une telle encapsulation comporte des étapes complexes et d'un prix de revient élevé.

L'encapsulation hétérogène consiste à reporter un capot étanche sur le substrat portant l'empilement. Ce type d'encapsulation est relativement simple à mettre en œuvre.

Le choix des matériaux constituant les électrodes positives est principalement dicté par les performances électrochimiques nécessaires au bon fonctionnement de l'application visée. Les oxydes métalliques de type LiₓM_{y}O_{z} (M étant un métal de transition comme le Fe, Mn, Co, Ni, Ta, Nb...) avec par exemple x≤1, y≤2, et z≤4 pour réaliser des couches cathodiques sont adaptés à des applications nécessitant des énergies surfaciques supérieures à 50 µAh.cm⁻².µm⁻¹. Ces matériaux d'électrode positive présentent l'avantage de contenir du lithium rendant possible l'utilisation d'un matériau non lithié pour réaliser l'électrode négative. Cet avantage est particulièrement utile pour des microbatteries devant être connectées par brasure à refusion et subir un « solder reflow ».

L'oxyde de cobalt lithié (LiCoO₂) est l'un des matériaux les plus utilisés dans la conception des électrodes positives pour les microbatteries solides en couches minces avec une capacité d'environ 62 µAh.cm⁻².µm⁻¹ et une tension nominale de fonctionnement relativement élevée, par exemple jusqu'à 4,2 V. Cependant, l'utilisation de ce type de cathode impose des contraintes supplémentaires aux systèmes d'encapsulation. En effet, la couche de LiCoO₂ relargue plusieurs éléments gazeux, tels que l'oxygène, l'hydrogène, l'oxyde de carbone, qui accompagne de façon abondante le fonctionnement électrochimique des électrodes séparées par l'électrolyte lors des cycles charge/décharge. La génération de ce flux gazeux peut engendrer une déformation mécanique des couches barrières conduisant à une dégradation de l'encapsulation et/ou à l'apparition de bulles à la surface du système d'encapsulation.

Le document US2008/0003493 décrit une batterie encapsulée dans un packaging étanche comportant un matériau getter.

### EXPOSÉ DE L'INVENTION

C'est par conséquent un but de la présente invention d'offrir une microbatterie encapsulée offrant une étanchéité dont la tenue dans le temps est augmentée, et un procédé d'encapsulation capable d'offrir une solution d'encapsulation durable pour des systèmes relarguant des espèces gazeuses au cours de leur vie, par exemple des microbatteries utilisant des oxydes métalliques de type LiₓM_{y}O_{z}, M étant un métal de transition.

Le but précédemment énoncé est atteint par une microbatterie lithiée sur un substrat support, recouverte d'un capot d'encapsulation, ledit capot et/ou la microbatterie et/ou le substrat comportant au moins une cavité et configurée pour stocker les espèces gazeuses générées par ma microbatterie.

L'encapsulation peut être obtenue au moyen d'un procédé d'encapsulation mettant en œuvre la réalisation d'un capot muni d'au moins une zone de stockage des espèces gazeuses libérées par le système encapsulé. Ainsi les gaz libérés n'exercent pas de contrainte sur le capot, en particulier au niveau de la zone périphérique du capot, qui pourrait conduire à une dégradation de l'encapsulation.

Par exemple, le capot comporte une couche destinée à assurer la fixation du capot sur le dispositif, par exemple un adhésif. De manière avantageuse, les cavités sont formées dans cette couche.

Dans un exemple avantageux, des éléments sont prévus dans les cavités ou dans les parois des cavités capables de capter les éléments gazeux relargués, par exemple des matériaux getters.

Le capot peut présenter une certaine élasticité et se déformer sous la pression du gaz généré.

En d'autres termes, on structure le capot et/ou la microbatterie et/ou le substrat avant assemblage du capot sur la microbatterie, de sorte à former des zones de stockage aptes à contenir les espèces gazeuses relarguées pendant toute la durée de vie de la microbatterie.

De manière très avantageuse, au moins une cavité est formée dans le capot en retrait de la face du capot en contact avec la microbatterie, et au moins un canal de section réduite par rapport à celles de la cavité débouche dans ladite face et permet aux espèces gazeuses de s'écouler vers la cavité. Ainsi l'impact de la réalisation de la cavité sur la surface de collage est réduit, et les propriétés de collage sont peu ou pas modifiées par la présence de la au moins une cavité.

La présente invention a alors pour objet une microbatterie encapsulée telle que définie dans la revendication 1.

Dans un exemple de réalisation, le capot comporte un film barrière et une couche de solidarisation portant la première face, et ladite au moins une cavité est formée uniquement dans la couche de solidarisation.

Le capot peut comporter au moins un canal reliant ladite au moins cavité à la première face. Dans un exemple, le capot comporte au moins un groupe de plusieurs cavités reliées à la première face par un canal commun.

Le film barrière peut comporter un feuillard métallique et une couche de renfort, ladite couche de renfort étant en contact avec la couche de solidarisation.

Dans un exemple avantageux, la microbatterie comporte au moins un matériau absorbant d'au moins un des éléments gazeux susceptibles d'être générés par la microbatterie. Le matériau absorbant peut être intégré dans la couche adhésive et/ou est déposé dans ladite cavité.

De préférence, le volume de stockage de ladite au moins une cavité est au moins égal à deux fois le volume total d'éléments gazeux que ladite microbatterie peut générer.

La zone périphérique a avantageusement une largeur d'au moins 0,5 mm.

Selon une caractéristique additionnelle, la couche de solidarisation est en matériau polymère déformable présentant une épaisseur suffisante pour se conformer au relief de la microbatterie par rapport au substrat support.

Par exemple, la microbatterie comporte une électrode positive en LₓM_{y}O_{z}, M étant un métal de transition, formée sur le substrat support et une électrode négative en lithium ou matériau lithié.

Selon une autre caractéristique additionnelle, le capot comporte une ouverture traversant le capot dans la direction de son épaisseur et débouchant sur un contact électrique relié à l'électrode positive et une ouverture traversant le capot et débouchant sur un contact électrique relié à l'électrode négative.

La présente invention a également pour objet un procédé de fabrication d'au moins une microbatterie encapsulée telle que définie dans la revendication 9.

Dans un exemple avantageux, la au moins une cavité est réalisée par structuration de la couche de solidarisation.

Selon un exemple, la au moins une cavité est réalisée à partir de la première face du capot.

De préférence, un film de protection recouvre ladite première face du capot pendant la formation de la au moins une cavité dans le capot et retrait du film de protection.

De manière avantageuse, la au moins une cavité est formée dans la couche de solidarisation avant sa fixation au film barrière.

La solidarisation du capot sur la microbatterie peut comporter une étape de laminage.

L'étape de solidarisation comporte une étape d'application d'une pression uniforme et simultanée sur toute la surface du capot en direction du substrat.

De manière avantageuse, le procédé comporte une étape de chauffage pendant de solidarisation.

Le procédé de fabrication peut avantageusement comporter la réalisation de la microbatterie sur le substrat, ladite microbatterie comportant une électrode positive en LxMyOz, M étant un métal de transition, formée en contact avec le substrat support, un électrolyte et une électrode négative en lithium ou matériau lithié.

### BRÈVE DESCRIPTION DES DESSINS

La présente invention sera mieux comprise sur la base de la description qui va suivre et des dessins en annexe sur lesquels:
- la figure 1 est une vue de dessus d'un ensemble de microbatteries sur un substrat support avant encapsulation,
- la figure 2 est une vue en coupe d'une microbatterie de la figure 1 le long du plan A-A,
- la figure 3 est une vue en coupe d'un exemple d'un ensemble de capots d'encapsulation en cours de réalisation,
- la figure 4A est une vue en coupe d'un exemple de l'ensemble de capots d'encapsulation selon l'invention de la figure 3 prêt à être appliqué sur les microbatteries pour assurer leur encapsulation,
- la figure 4B est une vue de dessous d'un capot issu de l'ensemble de la figure 4A pour l'encapsulation d'une microbatterie,
- La figure 5 est une vue de dessus de l'ensemble de la figure 1 encapsulés selon le procédé selon l'invention,
- la figure 6 est une vue en coupe le long du plan C-C de la figure 5,
- la figure 7 est une vue de dessus de différentes cavités de stockage de gaz selon l'invention,
- la figure 8 est une vue en coupe d'une microbatterie encapsulée selon une variante de la présente invention,
- la figure 9 est une vue de dessus d'un autre exemple de cavité selon l'invention,
- la figure 10 est une vue en coupe d'un ensemble de capots selon un autre exemple de réalisation de l'invention.
- la figure 11 est une vue en coupe d'une microbatterie encapsulée selon un autre mode de réalisation.

### EXPOSÉ DÉTAILLÉ DE MODES DE RÉALISATION PARTICULIERS

La description qui va suivre portera principalement sur l'encapsulation de microbatteries dont l'électrode positive est du LiCoO₂, mais il sera compris que la présente invention s'applique à l'encapsulation de toute microbatterie susceptible de relarguer des espèces gazeuses au cours de sa vie, par exemple au cours de son fonctionnement.

Dans la présente demande, on désigne par « microbatterie » l'empilement électrode positive, électrolyte, électrode négative et contacts électriques, et par « microbatterie encapsulée » la microbatterie formée sur un substrat et recouverte d'un capot d'encapsulation.

Dans la présente demande, on entend par « encapsulation », le fait d'isoler de manière étanche une microbatterie, par rapport à l'environnement extérieur, notamment des espèces qui pourraient endommager la microbatterie, par exemple l'oxyder.

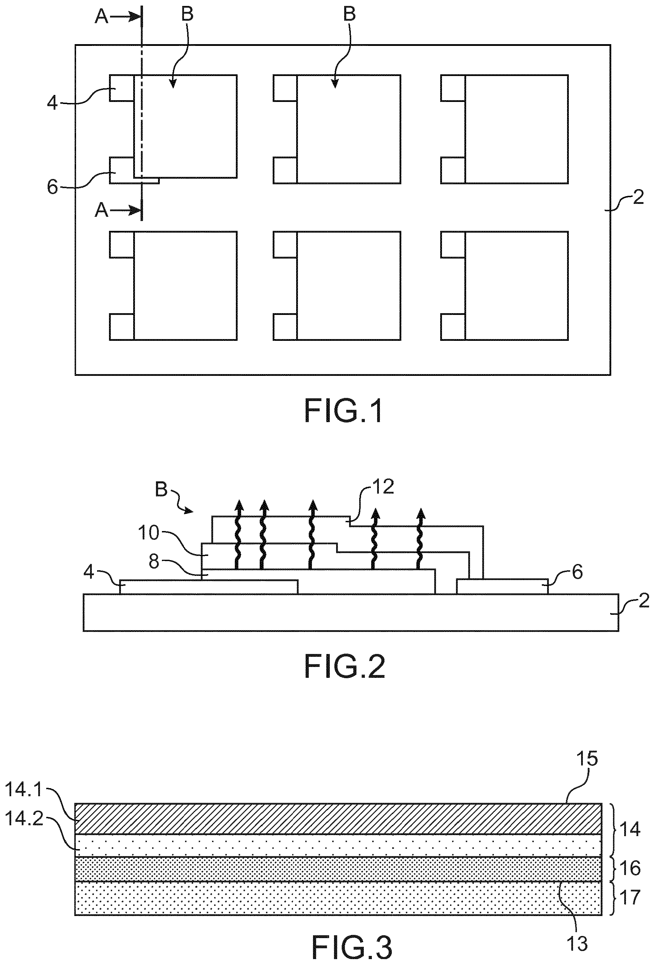

Sur la figure 1 on peut voir, vu de dessus, un système comportant plusieurs microbatteries B sur un substrat support 2. Dans la suite de la description, l'invention sera décrite par rapport à une seule microbatterie à des fins de simplicité.

Le substrat support est par exemple en verre ou en silicium dans ce dernier cas les couches actives sont configurées pour éviter les courts-circuits.

Chaque microbatterie B comporte un empilement représenté sur la figure 2, comportant, en partant du substrat support 2, un collecteur de courant cathodique 4 et un collecteur de courant anodique 6 formés sur le substrat 2. Les collecteurs de courant 4 et 6 sont par exemple en métal, tel que le titane, l'or, l'aluminium, le platine, le tungstène ou tout autre métal ou alliage couramment utilisé en tant que collecteur de courant.

L'empilement comporte ensuite l'électrode positive ou cathode 8, l'électrolyte 10 et l'électrode négative ou anode 12. L'électrode positive 8 est en contact avec le collecteur de courant 4 et l'électrode négative 12 est en contact avec le collecteur de courant 6.

Dans l'exemple décrit, l'électrode positive est en LiCoO₂ ayant une bonne conductivité électronique et ionique. L'électrolyte 10 est un isolant électronique avec une forte conductivité ionique, par exemple en LiPON, en LiPONB, en LiSiCON... L'électrode négative 12 est par exemple en lithium métallique, par exemple obtenu par évaporation. En variante, l'électrode négative est en matériau lithié, celui-ci peut être lithié dès le dépôt en effectuant un dépôt à partir d'une cible lithiée, ou devenir un matériau lithié lors du fonctionnement de la batterie, dans ce cas lors de la fabrication l'électrode négative 12 comporte par exemple une couche de silicium ou de germanium.

Lors du fonctionnement de la batterie, le LiCoO₂ de l'électrode positive dégage de l'oxygène, de l'hydrogène et de l'oxyde de carbone. De préférence, l'électrode qui dégage des éléments gazeux, dans le cas présent l'électrode positive est formée sur le substrat support 2, de sorte que le flux d'éléments gazeux se fasse principalement à travers l'empilement, le substrat support 2 étant en général étanche aux éléments gazeux puisqu'il assure une partie de l'encapsulation.

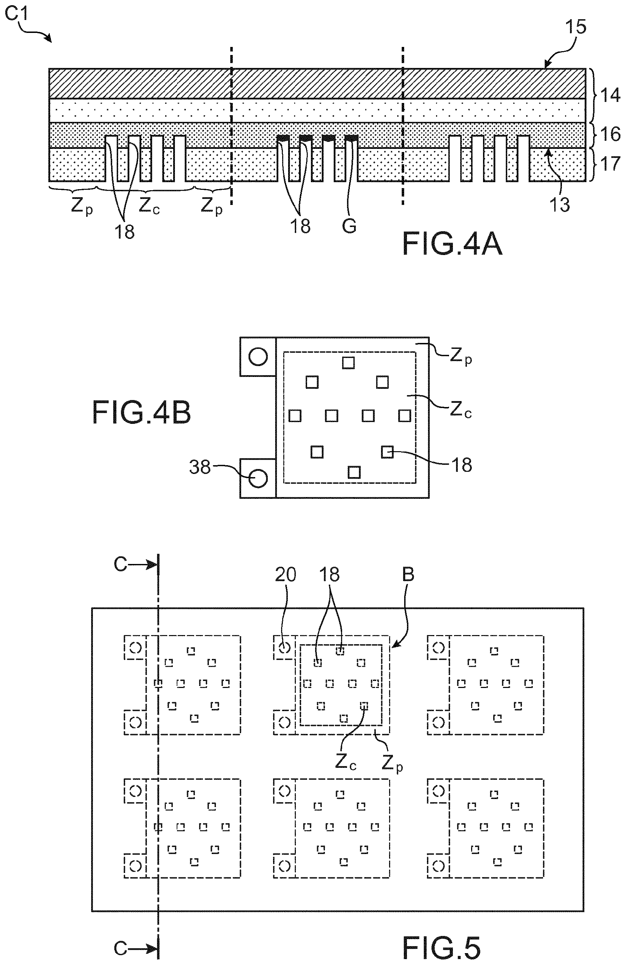

Sur les figures 3, 4A et 4B, on peut voir un exemple d'un ensemble de capots C1 en cours de réalisation et prêt à assurer l'encapsulation selon l'invention. Sur la figure 4A, les capots sont symboliquement séparés par des lignes en pointillés.

Le capot C1 comporte une première face 13 destinée être en contact avec l'empilement d'une microbatterie et le substrat support 2, et une deuxième face 15 destinée à être en contact avec l'environnement extérieur. La première face 13 comporte une zone Zc centrale destinée à être en contact avec l'empilement de la microbatterie, et une zone périphérique Zp entourant la zone centrale et destinée à être en contact avec le substrat support 2 et à entourer la microbatterie. Sur la figure 4B, on peut voir le capot de la figure 4A de dessous.

Le capot C1 comporte un empilement comprenant un film barrière 14 et une couche 16 destinée à solidariser le capot C1 sur le substrat support 2 et sur la microbatterie et à assurer l'encapsulation étanche de la microbatterie. La couche 16 est par exemple une couche de collage comportant un matériau adapté pour adhérer au substrat support, à la microbatterie et au film barrière. La couche 16 sera désignée « couche adhésive » ou « couche de solidarisation » dans la suite de la description.

La face du film barrière 14 qui n'est pas en contact avec la couche adhésive 16 forme la deuxième face 15 du capot, et la face de la couche adhésive 16 qui n'est pas en contact avec le film barrière 14 forme la première face 13 du capot.

Le film barrière 14 est destiné à assurer l'étanchéité du capot d'encapsulation vis-à-vis de l'environnement extérieur, en particulier vis-à-vis des espèces oxydantes, telles que la vapeur d'eau, l'oxygène, l'azote, l'hydrogène.... Le film barrière 14 a par exemple une épaisseur comprise entre quelques µm et quelques centaines de µm.

Le film barrière 14 comporte par exemple un feuillard formé d'un matériau monocouche homogène ou d'un matériau multicouche hétérogène. De manière avantageuse, il est choisi dans la famille des matériaux hautement barrières aux éléments oxydants présents dans l'atmosphère. Par exemple, il s'agit d'un feuillard métallique, par exemple d'épaisseur inférieure à 300 µm, à base d'aluminium ou à base d'acier, tel que le fer blanc, le fer noir, le fer chromé, l'acier inoxydable...

En variante, il comporte un empilement de couches de natures différentes, par exemple organiques et non organiques, choisies pour améliorer son étanchéité vis-à-vis des espèces oxydantes.

Dans l'exemple des figures 3 et 4A et 4B, le film barrière 14 comporte un feuillard 14.1 et un film 14.2 destiné à renforcer la tenue mécanique du capot. Le film de renfort 14.1 est par exemple en un matériau thermoplastique, par exemple d'une épaisseur inférieure à 100µm. Le matériau thermoplastique peut être choisi parmi le polyéthylène naphtalate (PEN), en polypropylène (PP), en polyéthylène téréphtalate (PET), en polyimide (PI)...

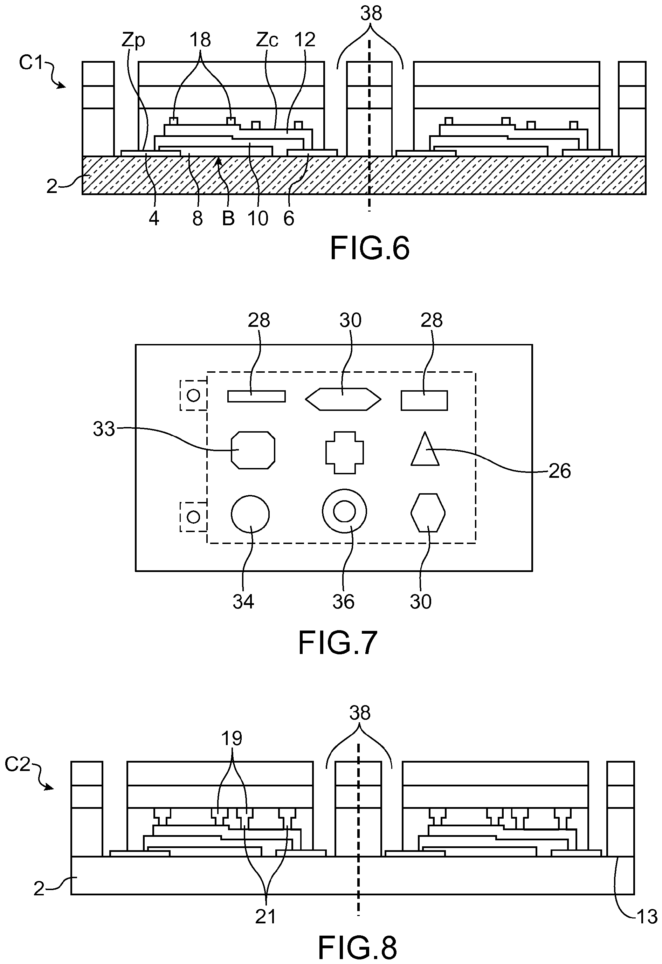

La partie adhésive 16 a une épaisseur telle qu'elle confère au capot d'encapsulation une certaine aptitude à se conformer au profil de l'empilement comme cela visible sur la figure 6. Cette aptitude à se conformer au relief de la microbatterie permet de garantir une protection efficace des couches actives de la microbatterie. De préférence la couche adhésive a une épaisseur au moins égale à la hauteur de la microbatterie, elle a par exemple une épaisseur comprise entre quelques µm et quelques dizaine de µm.

Le matériau de la couche adhésive 16 est choisi de sorte à présenter des propriétés de collage, d'isolation électrique et de compatibilité chimique avec les couches actives de la microbatterie. La couche adhésive 16 est par exemple réalisée à partir de films polymères à base d'acrylique, de silicone, de caoutchouc ou d'un mélange de ces matières. Par exemple, les adhésifs isolants de Tesa®, Henkel® ou 3M® peuvent convenir.

Le matériau de la couche adhésive peut être activé par exemple par la pression et/ou la température et/ou les rayons ultraviolets...

A titre d'exemple, le film barrière 14 est un complexe formé d'une couche d'aluminium d'une épaisseur de 35µm et d'une couche en PET d'une épaisseur de 28 µm. La couche adhésive 16 est un polymère d'une épaisseur de 25µm, par exemple les complexes Tesa61570® équipés d'adhésifs d'une épaisseur totale de 78µm commercialisés par la société Tesa.

La couche adhésive 16 est de préférence protégée par un film de protection 17 retirable au moment de l'assemblage avec les microbatteries, par exemple en PET d'une épaisseur de quelques µm, par exemple de 150 µm.

Dans un exemple de réalisation, le capot présente des propriétés élastiques, lui permettant de se déformer élastiquement sous l'action de la pression du gaz généré lors du fonctionnement de la batterie. Cette déformation du capot est déterminée pour ne pas provoquer de décollement au niveau de la zone périphérique afin d'éviter tout risque de perte d'étanchéité.

Le capot d'encapsulation comporte des cavités 18 débouchant dans la première face 13 destinées à être en contact avec la microbatterie.

Dans l'exemple représenté sur la figure 4A, seule la couche adhésive 16 comporte les cavités 18, les cavités ne débouchant pas dans le film barrière.

Sur la figure 4A, les cavités 18 traversent le film de protection 17. En effet, de préférence, les cavités sont réalisées avec le film de protection 17 en place. Le fait de conserver le film de protection 17 permet de préserver la première face de nature adhésive du capot des contaminants, notamment l'eau.

Lors de la mise en place du capot, le film de protection 17 est retiré comme cela est visible sur la figure 6, avec les portions des cavités formées dans le film de protection. Le volume de stockage total des cavités 18 est strictement supérieur au volume de gaz que la microbatterie est potentiellement susceptible de générer pendant toute sa durée de vie. De manière avantageuse, le volume de stockage total des cavités est au moins égal à deux fois le volume de gaz qui sera potentiellement généré, voire au moins 5 fois supérieur. Ainsi le risque de gonflement au niveau de l'interface de collage entre la microbatterie et le capot est sensiblement réduit, voire supprimé.

Le capot d'encapsulation de la figure 4A est particulièrement avantageux, lorsque le film barrière est conducteur électrique. En effet lors de l'application du capot sur la microbatterie, la couche adhésive se déforme pour se conformer au relief de la batterie. Il en résulte une déformation des cavités. En ne réalisant les cavités que dans la couche adhésive sans qu'elles ne débouchent dans ou sur le film barrière, tout risque de court-circuit entre les éléments de la microbatterie, en particulier entre l'électrode négative et le film barrière est évitée. Néanmoins en prévoyant une couche adhésive suffisamment épaisse, les cavités peuvent débouchées dans le film barrière tout en évitant un contact entre le film barrière et la microbatterie.

Selon un autre exemple de réalisation, le film barrière comporte un feuillard et une couche de renfort en matériau isolant électrique, les cavités peuvent déboucher dans la couche de renfort. Selon encore un autre exemple, le film barrière ne comporte qu'un ou que des matériaux isolants électriques, les cavités peuvent déboucher dans toutes les couches du film barrière.

Dans un exemple avantageux, on peut prévoir que toutes les cavités ou une partie d'entre elles comportent un ou des matériaux aptes à absorber ou capter les gaz générés par la microbatterie, il peut s'agir de matériaux getters G (figure 4A) ainsi les gaz ne sont pas uniquement stockés dans les cavités, ils sont piégés. Le ou les matériaux absorbants sont déposés sur la paroi des cavités après formation de celles-ci et/ou ils sont intégrés dans le matériau de la couche adhésive formant des inclusions particulaires dans la paroi des cavités. Ces matériaux absorbants peuvent être déposés en couches minces, par exemple de quelques µm.

Lorsque de tels matériaux sont mis en œuvre dans les cavités, le volume total prévu pour stocker le gaz peut être inférieur au volume potentiellement généré pendant toute la durée de vie de la batterie.

A titre d'exemple, les matériaux absorbants sont choisi parmi les matériaux de la colonne IVB du tableau périodique, tels que le titane, la zircone, le hafnium, ou encore parmi le vanadium, le nickel, le fer, l'aluminium, le cobalt. Le matériau getter peut être formé par des couches de calcium ou des couches de lithium.

Les cavités 18 sont réparties dans la première face 13 de sorte à déboucher dans la zone centrale Zc destinée à être en contact avec la microbatterie et à être au plus près de la génération des gaz.

La zone périphérique Zp permet de se prémunir de toute infiltration latérale des oxydants à travers les polymères de la partie adhésive. De préférence, les cavités sont formées relativement loin de la zone périphérique Zp pour limiter les éventuelles infiltrations latérales des oxydants. A titre d'exemple, dans le cas d'un polymère adhésif, non chargé en absorbeur, d'épaisseur de 25 µm, la zone périphérique a une largeur de préférence d'au moins 0,5 mm.

Sur la figure 8, on peut voir un autre exemple de capot d'encapsulation C2 selon l'invention comportant des volumes de stockage, chacun comportant une cavité 19 et un canal 21 reliant la cavité 19 à la première face 13 du capot, destinée à être en contact avec la microbatterie. Les cavités 19 sont déportées par rapport à la première face 13. Les canaux 21 présentant une section transversale réduite par rapport à celle des cavités, la surface de la première face ne participant pas au collage sur la microbatterie est réduite. Le volume de stockage total des cavités 19 est déterminé pour permettre le stockage du tout le volume de gaz potentiellement généré.

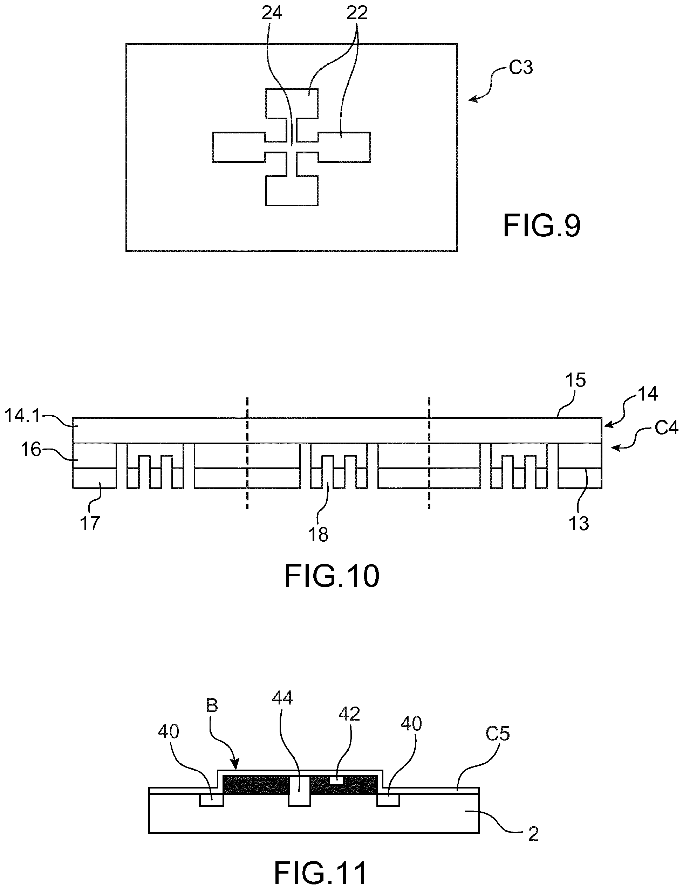

Sur la figure 9, on peut voir un autre exemple de capot d'encapsulation C3 selon l'invention. Dans cet exemple, le capot comporte plusieurs cavités 22 et un canal 24 connectant les cavités 22 à la première face 13 du capot en regard de la microbatterie. Ainsi, le ou les gaz générés lors du fonctionnement de la microbatterie sont guidés vers les cavités par un canal unique 24. La proportion de la première face ne participant pas au collage est également réduite, les propriétés de collage du capot d'encapsulation sont donc proches de celles d'un capot de l'état de la technique, i.e. sans cavités.

Il est à noter que les couches anodiques sont intrinsèquement poreuses et le flux gazeux suit des chemins préférentiels à travers les porosités pour atteindre les microcavités. Par conséquent la réduction des « zones de collecte » n'est pas dommageable à la collecte uniforme des gaz.

En variante, le capot comporte au moins une cavité et plusieurs canaux débouchant dans ladite cavité.

Les cavités peuvent présenter des volumes différents les unes des autres.

Les exemples des figures 8 et 9 sont réalisés de préférence en structurant la couche adhésive avant son assemblage avec le film barrière. Pour cela, les cavités sont formées dans la couche adhésive à partir de sa face destinée à être en contact avec le film barrière, et ensuite sont formés le ou les canaux.

Les capots C2 et C3 des figures 8 et 9 sont particulièrement adaptés aux exemples dans lesquels les cavités sont formées en tout ou partie dans le film barrière conducteur électrique. En effet, du fait des canaux de section réduite et malgré la déformation du capot lors de l'étape d'encapsulation, les risques de court-circuit entre le film barrière et la microbatterie sont sensiblement réduits, voire éliminés.

La surface occupée par les cavités et/ou les canaux menant aux cavités représente au plus 80% de la surface totale du film adhésif 16 solidarisé avec le composant, ce qui permet de garantir une protection latérale suffisante pour l'intégrité du composant. De manière avantageuse, la surface occupée par les cavités et/ou les canaux menant aux cavités représente au plus 25 % de la surface totale du film adhésif, et de manière préférée au plus 10% de la surface totale du film adhésif.

De préférence, la largeur de la zone périphérique est déterminée en fonction de la nature du film adhésif 16 et de son épaisseur. La largeur de la zone périphérique augmente avec la réduction de l'épaisseur du film adhésif 16.

La forme des cavités, et notamment leur section débouchant dans la première face peut avoir toute forme. Sur la figure 5, la section est de forme carrée. La figure 7 montre un capot avec des cavités de formes variées, telles que triangulaire 26, rectangulaire 28, hexagonale 30, en croix 32, carrée à angles rognés. Les formes peuvent être plus ou moins étroites. En variante, les cavités ont une section circulaire 34 ou annulaire 36. Il sera compris que préférentiellement un capot comporte des cavités de même forme pour simplifier la fabrication, mais qu'un capot avec des cavités de formes différentes ne sort pas du cadre de l'invention.

Dans un exemple avantageux, des ouvertures 38 traversant toute l'épaisseur du capot sont formées au droit des emplacements des contacts électriques 4 et 6. Ces ouvertures 38 assurent un échappement de l'air entre le capot et la microbatterie et réduisent le risque de voir des bulles être piégées entre le capot et la microbatterie. En outre elles permettent d'accéder aux contacts 4, 6 afin de réaliser des reprises de contact. De plus elles servent également avantageusement pour l'alignement du capot par rapport à la ou aux microbatteries lors de l'étape d'encapsulation.

Sur la figure 10, on peut voir un exemple de réalisation de capot d'encapsulation C4, dans lequel le film barrière ne comporte pas de film de renfort, l'épaisseur du capot est donc réduite. En outre dans cet exemple, les cavités ont des profondeurs différentes et certaines débouchent sur le film barrière et d'autres sont uniquement dans la couche adhésive 16

Le fonctionnement d'une microbatterie encapsulée selon l'invention va maintenant être décrit.

Lors de la charge de la microbatterie, i.e. lorsqu'elle délivre de l'électricité, des éléments gazeux sont générés à l'électrode positive 8, qui est formée sur le substrat support 2. Les éléments gazeux migrent à travers l'électrolyte 10 et l'électrode négative 12 et arrivent en contact avec le capot d'encapsulation C1, comme cela est symbolisé par les flèches G. Les éléments gazeux s'écoulent dans les cavités 18 débouchant dans la première face 13 du capot, soit directement, soit par l'intermédiaire d'un ou plusieurs canaux.

Lors de l'étape d'encapsulation, le capot d'encapsulation est déformé, en particulier la couche adhésive 16 qui est en matériau déformable, provoquant également la déformation des cavités 18. Sous l'effet de la pression exercée par les éléments gazeux, les cavités gonflent pour retrouver au moins leur forme avant l'étape d'encapsulation.

Un exemple de procédé de réalisation d'une microbatterie encapsulée selon l'invention va maintenant être décrit.

Le procédé de réalisation d'une microbatterie encapsulée selon l'invention comporte par exemple les étapes :
- de réalisation d'une microbatterie sur un substrat support,
- de réalisation d'un capot étanche aux espèces oxydantes comportant une couche adhésive destinée à venir en contact avec la microbatterie et le substrat,
- de formation des cavités ou des cavités et des canaux, en communication fluidique avec la face du capot destinée à venir en contact avec la microbatterie et le substrat,
- d'alignement et positionnement du capot d'encapsulation par-dessus le la microbatterie et le substrat,
- de report dudit capot sur le substrat et la microbatterie en exerçant par exemple une force d'appui.

Lors d'une première étape, la microbatterie de la figure 2 est réalisée. Le procédé de réalisation d'une telle microbatterie est bien connu de l'homme du métier.

Par exemple, à partir d'un substrat support, qui est par exemple en verre ou en silicium sur lequel ont été formés les contacts électriques, par exemple par dépôt et structuration d'une couche métallique, on réalise l'électrode positive, par exemple en LiCoO₂ par exemple par voie chimique, par exemple par dépôt chimique en phase vapeur ou par dépôt physique en phase vapeur ou PVD (Physical Vapor Deposition en terminologie anglo-saxonne). Par exemple, une couche de LiCoO₂ est formée sur le substrat et les contacts électriques par pulvérisation à partir d'une cible de LiCoO₂ pour former une couche par exemple d'une épaisseur de 10 µm. L'électrode positive peut être délimitée par exemple par un masque mécanique, par photolithographie, par gravure laser...

Un traitement thermique peut ensuite avantageusement être réalisé, par exemple à 600°C pendant 2h, afin de faire apparaître une phase cristalline dans la couche de LiCoO₂.

Lors d'une étape suivante, l'électrolyte est formé sur l'électrode positive, par exemple il s'agit de LiPON, de le LiPONB, LiSiCON. Par exemple, un électrolyte en LiPON a une épaisseur de 2µm. il peut être formé par pulvérisation cathodique à partir d'une cible préalablement préparée par frittage d'une poudre de Li₃PO₄. La couche LiPON est réalisée en ajoutant un gaz réactif d'azote durant le dépôt. La concentration d'azote est contrôlée selon les conditions de dépôt, telles que la température, la puissance, la pression.

Lors d'une étape suivante, on forme une couche sur l'électrolyte en vue de former l'électrode négative, par exemple à partir d'une couche de lithium ou d'un matériau lithié. Par exemple, la couche de lithium métallique a une épaisseur de 2 µm et est obtenue par évaporation sous vide

L'empilement de la figure 2 est ainsi obtenu.

Par exemple, juste après réalisation des couches actives la microbatterie offre une différence de potentiel qui oscille entre 1V et 2V dans le cas où l'anode employée est un matériau en lithium. La désinsertion du lithium à partir de la couche cathodique correspond à un cycle de charge de la microbatterie. Cela se manifeste généralement par une augmentation de la différence de potentiel entre la cathode et l'anode sous l'effet d'un courant de charge jusqu'à une tension de l'ordre de 4,2V dans le cas d'une cathode en LiCoO₂ et une anode en lithium métal. Le mouvement de charge s'accompagne d'une production gazeuse en abondance synchrone par rapport à l'état de charge de la microbatterie. Ainsi, ce phénomène de dégazage atteint son paroxysme à l'état de charge total à 4,2V correspondant à la désinsertion complète du lithium de la cathode.

Le gaz majoritaire généré par une électrode de type LiCoO₂ est l'oxygène ou ses composés (CO, CO₂). Par exemple, une électrode positive en LiCoO₂ de 10 µm d'épaisseur avec une surface réelle de 4 cm² obtenue selon les conditions opératoires décrites ci-dessus est susceptible de générer une pression relative partielle qui peut atteindre 0,1 bar après un seul cycle de charge et jusqu'à 1 bar après une dizaine de cycles de charge. Le volume total pouvant être généré par ce phénomène de dégazage est de 1 mm³. Les cavités du capot d'encapsulation sont donc avantageusement configurées pour stocker au moins 1 mm³ +/- 10%.

Lors d'une autre étape, le capot d'encapsulation est réalisé. Il comporte par exemple un feuillard métallique et une couche de PET formant le film barrière et une couche adhésive. Selon un mode de réalisation, le capot est obtenu par un procédé de laminage réalisé à température ambiante sous vide d'un film PET d'une épaisseur de 28µm sur un film barrière en aluminium d'une épaisseur de 35 µm. La surface du capot d'encapsulation correspond sensiblement à celle de la microbatterie à encapsuler comportant la zone centrale et la zone périphérique.

Pour réaliser le capot C1 de la figure 4, les cavités sont par exemple réalisées à partir de la première face du capot par gravure localisée au moyen d'un laser. La longueur d'onde du laser est choisie en fonction du matériau de la couche adhésive et/ou film barrière et les dimensions des cavités. A titre d'exemple, un laser CO₂ (10, 4 µm en longueur d'onde) possédant une fréquence de 1ms et une puissance de 3 Watts et une vitesse de déplacement de 10 mm/s permet aisément de creuser les formes rectangulaires (0,5 mm x 0,5 mm) et d'une profondeur de 0,02 mm.

Les dimensions des cavités sont avantageusement comprises :
- 0,5 mm +/-100 µm x 0,5 mm +/- 100 µm pour le fond de la cavité,
- 0,02 mm +/- 100 µm pour la profondeur.

En variante, les cavités peuvent être réalisées par retrait mécanique, tel que le matriçage ou punching en terminologie anglo-saxonne, ou par gravure chimique.

De préférence, l'étape de formation des cavités est faite en présence du film de protection afin de préserver l'intégrité de la face collante.

Selon cet exemple, les films laminés sont structurés avant de retirer les films de protection. L'exemple de réalisation des cavités permet de ne pas abimer le film de protection, i.e. permet d'éviter les dégradations/modifications du film 17 qui peuvent engendrer soit un scellement permanent du film de protection au film 16 soit une mauvaise définition des cavités 18. En effet, le film de protection et la couche de solidarisation 16 sont généralement de même nature et la sélectivité de gravure par laser est très critique. Un son particulier

Pour réaliser les capots des figures 8 et 9, la couche adhésive est structurée avant son assemblage avec le film barrière à partir de la face arrière de la couche adhésive, les cavités étant formées en premières puis les canaux. Dans les exemples, les cavités sont formées dans la couche adhésive, le film barrière formant ou non une des parois des cavités. En variante, les cavités sont formées tout ou partie dans le film barrière.

En variante, les cavités sont formées au moyen d'un laser.

Les cavités sont réalisées dans la zone centrale Zc du capot. Les ouvertures 38 pour les contacts peuvent également être formées lors de l'étape de réalisation des cavités. Le laser est programmé pour réaliser les cavités à des emplacements donnés suivant un pas donné ou non. De préférence, les cavités sont réparties de manière régulière.

Lors d'une étape suivante, le capot structuré est reporté sur la microbatterie. Pour cela, le capot est aligné avec la microbatterie de sorte que les cavités 18 soient en regard de l'empilement. De préférence, les ouvertures 38 pour les contacts 4, 6 sont utilisées pour l'alignement. La première face 13 du capot dans laquelle débouchent les cavités est rapprochée de la microbatterie.

On exerce ensuite un appui sur la deuxième face 15 du capot en direction de la microbatterie et du substrat de sorte à faire à mettre en contact intime la couche adhésive 16, la microbatterie et le substrat. Par exemple, l'encapsulation est réalisée par laminage ou scellement.

Dans l'exemple d'assemblage par laminage, celui-ci est de préférence réalisé sous vide ou sous atmosphère contrôlée, afin de se prémunir de l'oxydation des couches lithiées. Les conditions de laminage peuvent être ajustées en fonction de la nature des films adhésifs utilisés. Préférentiellement, l'assemblage entre le capot d'encapsulation, par exemple comportant une couche d'aluminium, une couche de PET et une couche adhésive et la microbatterie, est réalisé à une température de l'ordre de 90°C avec une pression supérieure à 1 bar et une vitesse inférieure à 3 m/mn. La couche adhésive peut par exemple comporter le matériau portant la référence Tesa61562 d'une épaisseur de 25 µm commercialisée par la société Tesa.

Suivant le type de matériau utilisé pour la couche adhésive, il est possible de ne pas chauffer lors du laminage, par exemple en utilisant une couche adhésive dont le matériau est réticulé par insolation UV, après laminage. Dans ce cas, le film barrière est choisi transparent aux rayons UV. Par exemple, on peut utiliser les adhésifs fabriqués par Tesa portant la référence Tesa61560, Tesa61501, Tesa61562, ceux fabriqués par 3M portant la référence 1007N, 9703, ceux fabriqués par Henkel portant la référence Ablefilm ECF550, Ablefilm ECF561E,.... Pour les films barrières transparents, on peut utiliser le matériau portant la référence Tesa61560 commercialisé par Tesa, GL film commercialisé par Toppan, ou FTB3-50 et FTB3-125 commercialisés par 3M.

L'assemblage du capot sur la microbatterie est en variante être réalisé par scellement. Pour cela, on applique sur toute la deuxième face du capot une pression, répartie de manière homogène en direction du substrat et de la microbatterie, avantageusement en présence d'un système de chauffage. Afin de garantir une excellente fixation entre le capot et le substrat portant la microbatterie, la pression de scellement peut être de l'ordre de 2 bars et la température de l'ordre de 90°C dans le cas d'une couche adhésive Tesa60260, Tesa61562 et un film barrière en aluminium/PET.

La microbatterie encapsulée représentée sur la figure 6 est alors formée. Le capot s'est conformé au relief de la microbatterie et est en contact intime avec celle-ci.

Dans les exemples représentés, plusieurs batteries sont encapsulées simultanément. On réalise alors une nappe de plusieurs capots d'encapsulation, chacun comporte une zone centrale et une zone périphérique, qui sont alignés simultanément avec les microbatteries formés sur un substrat support unique. L'encapsulation est réalisée comme décrit ci-dessus, par laminage ou scellement. Ensuite, les microbatteries encapsulées sont séparées les unes des autres, par exemple par sciage.

Dans un autre exemple de réalisation, une couche de protection temporaire est formée sur les couches lithiées, permettant ainsi de réaliser l'étape de report du capot, sans nécessité d'atmosphère inerte. La couche de protection est formée juste après la formation de la couche anodique. La couche de protection est par exemple en alumine, par exemple déposée par un procédé de dépôt de couches minces atomiques ou ALD (Atomic Layer Déposition). Par exemple, l'épaisseur de la couche de protection est comprise entre 10 nm à 50 nm et la température optimale du procédé ALD est de l'ordre de 80°C.

Dans un autre mode de réalisation représenté sur la figure 11, des cavités 20 sont formées dans le substrat 2 uniquement, des cavités 22 sont formées dans l'empilement de la microbatterie uniquement et des cavités 24 sont formées à la fois dans l'empilement de la microbatterie et dans le substrat.

La microbatterie peut comporter des cavités 40 et/ou des cavités 42 et/ou des cavités 44.

Dans cet exemple, le capot C5 ne comporte pas de cavités 18. Dans un autre exemple, la microbatterie comporte des cavités 18 dans le capot et des cavités 40 et/ou 42 et/ou 44. Le volume des toutes les cavités est fixé de sorte à contenir tout le gaz potentiellement généré.

Le procédé de fabrication d'une telle microbatterie encapsulée est proche de celui décrit ci-dessus. Les cavités 40, 42, 44 peuvent être réalisées par gravure après réalisation de l'ensemble substrat et microbatterie et avant mise en place du capot. Les cavités dans le capot sont réalisées comme cela a été décrit ci-dessus.

## Revendications

1. Microbatterie encapsulée comportant une microbatterie (B) portée par un substrat (2), un capot d'encapsulation (C1, C2, C3, C4), ledit capot d'encapsulation comportant une première face (13) en contact avec la microbatterie (B) et le substrat (2), ladite première face (13) comportant une zone centrale (Zc) et une zone périphérique (Zp) entourant la zone centrale (Zc), la zone centrale (Zc) étant en contact avec la microbatterie (B) et la zone périphérique (Zp) étant en contact au moins avec le substrat (2),
la microbatterie encapsulée comportant au moins une cavité apte à collecter un élément gazeux généré par la microbatterie, ladite au moins une cavité étant formée :
- dans le capot d'encapsulation en communication fluidique avec la zone centrale, et/ou
- dans le substrat, et/ou
- dans la microbatterie.

2. Microbatterie encapsulée selon la revendication 1, dans laquelle le capot comporte un film barrière (14) et une couche de solidarisation (16) portant la première face (13), et dans laquelle ladite au moins une cavité (18) est formée uniquement dans la couche de solidarisation (16).

3. Microbatterie encapsulée selon la revendication 1 ou 2, dans laquelle le capot (C2) comporte au moins un canal (19) reliant ladite au moins cavité (21) à la première face (13).

4. Microbatterie encapsulée selon la revendication 3, dans laquelle le capot comporte au moins un groupe de plusieurs cavités (22) reliées à la première face par un canal commun (24), ou le film barrière (14) comporte un feuillard métallique (14.1) et une couche de renfort (14.2), ladite couche de renfort (14.2) étant en contact avec la couche de solidarisation (16).

5. Microbatterie encapsulée selon l'une des revendications 1 à 4, comportant au moins un matériau absorbant d'au moins un des éléments gazeux susceptibles d'être générés par la microbatterie, le matériau absorbant (G) étant avantageusement intégré dans la couche adhésive et/ou est déposé dans ladite cavité.

6. Microbatterie encapsulée selon l'une des revendications 1 à 5, dans laquelle le volume de stockage de ladite au moins une cavité (18) est au moins égal à deux fois le volume total d'éléments gazeux que ladite microbatterie peut générer, et/ou dans laquelle la zone périphérique a une largeur d'au moins 0,5 mm.

7. Microbatterie encapsulée selon l'une des revendications 1 à 6, dans laquelle la couche de solidarisation (16) est en matériau polymère déformable présentant une épaisseur suffisante pour se conformer au relief de la microbatterie par rapport au substrat support.

8. Microbatterie encapsulé selon l'une des revendications précédentes, dans laquelle la microbatterie comporte une électrode positive en LₓM_{y}O_{z}, M étant un métal de transition, formée sur le substrat support et une électrode négative en lithium ou matériau lithié, par exemple le capot comporte une ouverture (38) traversant le capot dans la direction de son épaisseur et débouchant sur un contact électrique relié à l'électrode positive et une ouverture (38) traversant le capot et débouchant sur un contact électrique relié à l'électrode négative

9. Procédé de fabrication d'au moins une microbatterie encapsulée comportant :
- la fourniture d'une microbatterie (B) formée sur un substrat (2)
- la réalisation d'un capot d'encapsulation comportant une première face munie d'une couche de solidarisation apte à solidariser ledit capot à ladite microbatterie et audit substrat,
la microbatterie comportant au moins une cavité apte à collecter un élément gazeux généré par la microbatterie, ladite au moins une cavité étant formée :
- dans le capot d'encapsulation en communication fluidique avec la zone centrale, et/ou
- dans le substrat, et/ou
- dans la microbatterie,
- la mise en place du capot sur la microbatterie et sur le substrat, de sorte que la première face soit en contact avec la microbatterie et le substrat, et dans le cas où le capot comporte une cavité, de sorte que ladite au moins une cavité débouche au droit de ladite microbatterie,
- la solidarisation dudit capot à ladite microbatterie et audit substrat de sorte à réaliser une encapsulation de ladite microbatterie.

10. Procédé de fabrication selon la revendication 9, dans lequel la au moins une cavité est réalisée par structuration de la couche de solidarisation.

11. Procédé de fabrication selon la revendication 9 ou 10, dans lequel la au moins une cavité est réalisée à partir de la première face du capot.

12. Procédé de fabrication selon l'une des revendications 9 à 11, dans lequel un film de protection recouvre ladite première face du capot pendant la formation de la au moins une cavité dans le capot et retrait du film de protection.

13. Procédé de fabrication selon l'une des revendications 9 à 12, dans lequel la au moins une cavité est formée dans la couche de solidarisation avant sa fixation à un film barrière.

14. Procédé de fabrication selon l'une des revendications 9 à 13, dans lequel la solidarisation du capot sur la microbatterie comporte une étape de laminage, et/ou la solidarisation comporte une étape d'application d'une pression uniforme et simultanée sur toute la surface du capot en direction du substrat, un chauffage étant avantageusement appliqué pendant la solidarisation.

15. Procédé de fabrication selon l'une des revendications 9 à 14, comportant la réalisation de la microbatterie sur le substrat (4), ladite microbatterie comportant une électrode positive en LₓM_{y}O_{z}, M étant un métal de transition, formée en contact avec le substrat support, un électrolyte et une électrode négative en lithium ou matériau lithié.

## Patentansprüche

1. Eingekapselte Mikrobatterie mit einer von einem Substrat (2) getragenen Mikrobatterie (B), einer Einkapselungskappe (C1, C2, C3, C4), wobei die Einkapselungskappe eine erste Fläche (13) aufweist, die mit der Mikrobatterie (B) und dem Substrat (2) in Kontakt steht, wobei die erste Fläche (13) einen Mittelbereich (Zc) und einen Umfangsbereich (Zp) aufweist, der den Mittelbereich (Zc) umgibt, wobei der Mittelbereich (Zc) in Kontakt mit der Mikrobatterie (B) ist und der Umfangsbereich (Zp) in Kontakt zumindest mit dem Substrat (2) ist,
wobei die eingekapselte Mikrobatterie zumindest einen Hohlraum aufweist, der dazu geeignet ist, ein von der Mikrobatterie erzeugtes gasförmiges Element zu sammeln, wobei der zumindest eine Hohlraum gebildet ist:
- in der Einkapselungskappe in Fluidverbindung mit dem Mittelbereich, und/oder
- im Substrat, und/oder
- in der Mikrobatterie.

2. Eingekapselte Mikrobatterie nach Anspruch 1,
wobei die Kappe eine Sperrfolie (14) und eine die erste Fläche (13) tragende Befestigungsschicht (16) enthält, und wobei der zumindest eine Hohlraum (18) nur in der Befestigungsschicht (16) ausgebildet ist.

3. Eingekapselte Mikrobatterie nach Anspruch 1 oder 2,
wobei die Kappe (C2) zumindest einen Kanal (19) aufweist, der den zumindest einen Hohlraum (21) mit der ersten Fläche (13) verbindet.

4. Eingekapselte Mikrobatterie nach Anspruch 3,
wobei die Kappe zumindest eine Gruppe von mehreren Hohlräumen (22) aufweist, die durch einen gemeinsamen Kanal (24) mit der ersten Fläche verbunden sind, oder die Sperrfolie (14) eine Metalllage (14.1) und eine Verstärkungsschicht (14.2) aufweist, wobei die Verstärkungsschicht (14.2) in Kontakt mit der Befestigungsschicht (16) steht.

5. Eingekapselte Mikrobatterie nach einem der Ansprüche 1 bis 4,
enthaltend zumindest ein absorbierendes Material aus zumindest einem der gasförmigen Elemente, die von der Mikrobatterie erzeugt werden können, wobei das absorbierende Material (G) vorteilhaft in die Haftschicht integriert ist und/oder in dem Hohlraum abgeschieden ist.

6. Eingekapselte Mikrobatterie nach einem der Ansprüche 1 bis 5,
wobei das Speichervolumen des zumindest einen Hohlraums (18) zumindest doppelt so groß ist wie das Gesamtvolumen der gasförmigen Elemente, die die Mikrobatterie erzeugen kann, und/oder wobei der Umfangsbereich eine Breite von zumindest 0,5 mm aufweist.

7. Eingekapselte Mikrobatterie nach einem der Ansprüche 1 bis 6,
wobei die Befestigungsschicht (16) aus einem verformbaren polymeren Material besteht, das eine ausreichende Dicke aufweist, um sich dem Relief der Mikrobatterie bezüglich des Trägersubstrats anzupassen.

8. Eingekapselte Mikrobatterie nach einem der vorhergehenden Ansprüche,
wobei die Mikrobatterie eine auf dem Trägersubstrat ausgebildete positive Elektrode aus LₓM_{y}O_{z}, wobei M ein Übergangsmetall ist, und eine negative Elektrode aus Lithium oder lithiumhaltigem Material aufweist, wobei beispielsweise die Kappe eine Öffnung (38) aufweist, die die Kappe in Richtung ihrer Dicke durchsetzt und in einen mit der positiven Elektrode verbundenen elektrischen Kontakt mündet, sowie eine Öffnung (38), die die Kappe durchsetzt und in einen mit der negativen Elektrode verbundenen elektrischen Kontakt mündet.

9. Verfahren zur Herstellung zumindest einer eingekapselten Mikrobatterie, umfassend:
- Bereitstellen einer Mikrobatterie (B), die auf einem Substrat (2) ausgebildet ist,
- Herstellen einer Einkapselungskappe, die eine erste Fläche aufweist, die mit einer Befestigungsschicht versehen ist, die dazu geeignet ist, die Kappe an der Mikrobatterie und an dem Substrat zu befestigen,
wobei die Mikrobatterie zumindest einen Hohlraum aufweist, der dazu geeignet ist, ein von der Mikrobatterie erzeugtes gasförmiges Element zu sammeln, wobei der zumindest eine Hohlraum ausgebildet ist:
- in der Einkapselungskappe in Fluidverbindung mit dem Umfangsbereich, und/oder
- im Substrat, und/oder
- in der Mikrobatterie,
- Anordnen der Kappe an der Mikrobatterie und am Substrat, derart, dass die erste Fläche in Kontakt mit der Mikrobatterie und dem Substrat ist, und für den Fall, dass die Kappe einen Hohlraum umfasst, derart, dass der zumindest eine Hohlraum in den Bereich der Mikrobatterie mündet,
- Befestigen der Kappe an die Mikrobatterie und an das Substrat, um eine Einkapselung der Mikrobatterie zu erhalten.

10. Herstellungsverfahren nach Anspruch 9,
wobei der zumindest eine Hohlraum durch Strukturierung der Befestigungsschicht ausgebildet wird.

11. Herstellungsverfahren nach Anspruch 9 oder 10,
wobei der zumindest eine Hohlraum ausgehend von der ersten Fläche der Kappe ausgebildet wird.

12. Herstellungsverfahren nach einem der Ansprüche 9 bis 11,
wobei eine Schutzfolie die erste Fläche der Kappe während der Bildung des zumindest einen Hohlraums in der Kappe bedeckt, dann Entfernen der Schutzfolie.

13. Herstellungsverfahren nach einem der Ansprüche 9 bis 12,
wobei der zumindest eine Hohlraum in der Befestigungsschicht vor deren Befestigung an einer Sperrfolie gebildet wird.

14. Herstellungsverfahren nach einem der Ansprüche 9 bis 13,
wobei das Befestigen der Kappe an die Mikrobatterie einen Laminierungsschritt umfasst und/oder das Befestigen einen Schritt des Aufbringens von gleichmäßigem und gleichzeitigem Druck über die gesamte Oberfläche der Kappe in Richtung des Substrats umfasst, wobei während des Befestigens vorteilhaft eine Erwärmung erfolgt.

15. Herstellungsverfahren nach einem der Ansprüche 9 bis 14,
umfassend das Ausbilden der Mikrobatterie auf dem Substrat (4), wobei die Mikrobatterie eine positive Elektrode aus LₓM_{y}O_{z}, wobei M ein Übergangsmetall ist, die in Kontakt mit dem Trägersubstrat ausgebildet ist, einen Elektrolyten und eine negative Elektrode aus Lithium oder lithiumhaltigem Material enthält.

## Claims

1. Encapsulated microbattery comprising a microbattery (B) supported on a substrate (2), an encapsulation cover, said encapsulation cover (C1, C2, C3, C4) comprising a first face (13) in contact with the microbattery and the substrate (2), said first face (13) comprising a central zone (Zc) and a peripheral zone (Zp) surrounding the central zone (Zc), the central zone (Zc) being in contact with the microbattery (B) and the peripheral zone (Zp) being in contact with at least the substrate (2),
the encapsulated microbattery comprising at least one cavity configured to collect a gaseous element generated by the microbattery, said at least one cavity being formed:
- in the encapsulation cover in fluid communication with the central zone, and/or
- in the substrate, and/or
- in the microbattery.

2. Encapsulated microbattery according to claim 1, in which the cover comprises a barrier film (14) and a securing layer (16) supporting the first face (13) and in which said at least one cavity (18) is formed only in the securing layer (16).

3. Encapsulated microbattery according to claim 1 or 2, in which the cover (C2) comprises at least one channel (19) connecting said at least one cavity (21) to the first face (13).

4. Encapsulated microbattery according to claim 3, in which the cover comprises at least one group of several cavities (22) connected to the first face through a common channel (24), or the barrier film (14) comprises metal foil (14.1) and a reinforcing layer (14.2), said reinforcing layer (14.2) being in contact with the securing layer (16).

5. Encapsulated microbattery according to one of the claims 1 to 4, comprising at least one absorbent material configured to absorb at least one of the gaseous elements that can be generated by the microbattery, the absorbent material (G) being advantageously integrated in the adhesive layer and/or is deposited in said cavity.

6. Encapsulated microbattery according to one of the claims 1 to 5, in which the storage volume of said at least one cavity (18) is at least equal to twice the total volume of gaseous elements that said microbattery can generate, and/or in which the peripheral zone has a width which is equal to at least 0.5 mm.

7. Encapsulated microbattery according to one of the claims 1 to 6, in which the securing layer (16) is made of a deformable polymer material sufficiently thick to match the relief of the microbattery relative to the support substrate.

8. Encapsulated microbattery according to one of the previous claims, in which the microbattery comprises a positive electrode made of LₓM_{y}O_{z}, M being a transition metal, formed on the support substrate and a negative electrode made of lithium or a lithiated material, for example the cover comprises an opening (38) passing through the cover in the direction of its thickness and opening up on an electrical contact connected to the positive electrode and an opening (38) passing through the cover and opening up on an electrical contact connected to the negative electrode.

9. Method of manufacturing at least one encapsulated microbattery comprising:
- supply of a microbattery (B) made on a substrate (2),
- manufacturing of an encapsulation cover comprising a first face provided with a securing layer capable of securing said cover to said microbattery and to said substrate,
the cover comprising at least one cavity capable of collecting a gaseous element generated by the microbattery, said at least one cavity being formed:
- in the encapsulation cover in fluid communication with the central zone, and/or
- in the substrate, and/or
- in the microbattery,
- placement of the cover on the microbattery and on the substrate, such that the first face is in contact with the microbattery and the substrate, and in the case in which the cover comprises a cavity, such that said at least one cavity opens up facing said microbattery,
- securing said cover to said microbattery and to said substrate so as to form an encapsulation of said microbattery.

10. Manufacturing method according to claim 9, in which the at least one cavity is made by structuring of the securing layer.

11. Manufacturing method according to claim 9 or 10, in which the at least one cavity is made from the first face of the cover.

12. Manufacturing method according to one of the claims 9 to 11, in which a protection film covers said first face of the cover during formation of the at least one cavity in the cover and removal of the protection film.

13. Manufacturing method according to one of the claims 9 to 12, in which the at least one cavity is formed in the securing layer before its attachment to a barrier film.

14. Manufacturing method according to one of the claims 9 to 13, in which the securing of the cover on the microbattery comprises a rolling step and/or the securing comprises a step to apply a uniform pressure simultaneously over the entire surface area of the cover towards the substrate, said method advantageously comprising a heating step during the securing.

15. Manufacturing method according to one of the claims 9 to 14 13, comprising making the microbattery on the substrate (4), said microbattery comprising a positive electrode made of LₓM_{y}O_{z}, M being a transition metal, formed in contact with the support substrate, an electrolyte and a negative electrode made of lithium or a lithiated material.
